# EUROPEAN PATENT SPECIFICATION

(11) **EP 2 289 825 B1**
(45) Date of publication and mention of the grant of the patent: **29.08.2012**
(21) Application number: 10169292.9
(22) Date of filing: 12.07.2010
(51) Int. Cl.: B65G 47/22, B65G 47/24

(54) **Method and device for individualizing an object**
Verfahren und Vorrichtung zur Vereinzelung eines Objekts
Procédé et dispositif pour individualiser un objet

(30) Priority: 27.08.2009 NL 1037231
(43) Date of publication of application: 02.03.2011
(73) Proprietor: Van Heiningen, Arjan Peter, 7161 AJ Neede (NL)
(72) Inventor: Van Heiningen, Arjan Peter, 7161 AJ Neede (NL)
(74) Representative: Mink-Lindenburg, Charlotte Hildegard

(56) References cited:
- EP-A1- 0 076 525
- NL-C1- 1 024 385
- US-A- 4 446 960

## Description

The invention relates to a method and a device for individualizing and presenting for further processing an elongate object provided with protrusions close to the outer ends.

Such a device can for instance be utilized in situations where large numbers of elongate objects obtained in an injection-moulding process, for instance bucket handles in an extended state, are supplied in a manner which is not very ordered and must be further processed. The protrusions on the outer ends of this type of elongate object are for instance toadstool-like hinge parts which easily become hooked together, whereby it is particularly difficult to individualize the elongate objects in an automated process.

The device according to the invention as defined in claim 1 makes it possible to remove one elongate object from a supply and has the feature that the device comprises a supply holder in which a number of elongate objects can be deposited and pressure means for flattening elongate objects present in the supply holder, and at least one gripper positioned close to a longitudinal side of the supply holder and adapted to grip and pull the closest elongate object out of the supply holder. Outer ends of other elongate objects hooked onto the closest elongate object can here twist and bend, but the hooked-together protrusions will eventually release.

The pressing means comprise a first and a second pressing body for pressing the elongate objects against each other close to their centres, wherein at least the second pressing body is coupled to a drive adapted to move the second pressing body reciprocally at least substantially perpendicularly of the elongate objects so that the central parts of the elongate objects come to lie mutually adjacently before the gripper grips the closest elongate object.

The inventive device has the feature that the device is also provided with a press-out member for sliding the elongate objects in a direction of the gripper when the pressing bodies are released. This has the result that the gripper will always find an elongate object at the same location, this significantly enhancing the speed of the process.

It is noted that a device according to the preamble of claim 1 is known from NL1024385.

A favourable embodiment of the inventive device whereby this mutually adjacent placing of the elongate objects takes place particularly effectively has the feature that a side of the first pressing body which can press on the elongate objects and a side of the second pressing body which can press on the elongate objects are provided with a friction layer.

A further favourable embodiment which guarantees long-term good operation of the friction layer has the feature that the friction layer is manufactured from polyurethane.

A further favourable embodiment of the inventive device has the feature that the pressing means also comprise a guide adapted to prevent the elongate objects sliding over each other when the pressing bodies are released. The pressure exerted by the guide means is here so small that the gripper can remove an elongate object without difficulty, while the other elongate objects are held adjacently of each other by the guide during the removal.

A further favourable embodiment, which ensures that an elongate object is always presented to the gripper parallel to the longitudinal side of the supply holder, has the feature that the gripper is provided with an orienting bracket running parallel to the longitudinal side of the supply holder for the purpose of orienting an elongate object for gripping at least substantially parallel to the longitudinal side of the supply holder.

A further favourable embodiment has the feature that the first pressing body and the second pressing body are provided with a recess running transversely of the elongate objects for allowing passage of the press-out member, so that the pressing bodies need practically no displacement during the release.

A further favourable embodiment of the inventive device has the feature that the device also comprises a filling member consisting of a step-like structure with pushing-up members for periodically filling an intermediate magazine with one to five elongate objects. It has been found that a very reliable individualizing process can be realized using such a filling.

A further favourable embodiment has the feature that the device is provided with two discs provided with a recess for taking the elongate objects present in the intermediate magazine out of the intermediate magazine and placing them in the supply holder. The recess of a disc is preferably provided here with a hook-like edge and with a straight edge provided with a support plate. The hook-like edge can be utilized very effectively for the purpose of receiving elongate objects hanging halfway out of the intermediate magazine, while the two edges provided with a support plate provide for a better filling of the intermediate magazine because they straighten the elongate objects to some extent.

A favourable embodiment with which the individualizing process can be further optimized has the feature that the device is provided with at least one outfeed magazine into which the gripper can place individual elongate objects, and a reversing member for orienting elongate objects present in the outfeed magazine such that the protrusions are all in the same direction.

The invention also relates to a method of individualizing and presenting for further processing elongate objects provided with protrusions close to the outer ends. The inventive method has the feature that a number of elongate objects is placed in a supply holder, that the elongate objects are pressed against each other close to their centres by pressing bodies, wherein at least one pressing body moves reciprocally several times in a direction perpendicularly of a longitudinal direction of the elongate objects, such that at least close to their centres the elongate objects come to lie adjacently of each other, after which the pressing bodies are released to some extent, after which the elongate objects are pressed out of the supply holder by a press-out member, wherein a gripper placed adjacently of the supply holder always grips and places the closest elongate object in a magazine.

The invention will now be further elucidated with reference to the following figures, in which:
- Fig. 1A: shows a schematic top view of a supply holder with elongate elements and a first pressing body;
- Fig. 1B: shows the supply holder together with a second pressing body;
- Fig. 2A: shows the supply holder in combination with the pressing bodies and a press-out member;
- Fig. 2B: shows the supply holder in combination with the pressing bodies, the press- out member and a gripper;
- Fig. 3A: shows a front view of the supply holder in combination with the pressing bodies, the press-out member and a guide, wherein the pressing bodies are activated;
- Fig. 3B: shows a front view of the supply holder in combination with the pressing bodies, the press-out member and a guide, wherein the pressing bodies are no longer activated;
- Fig. 4A: shows a schematic side view of a possible embodiment of a filling member;
- Fig. 4B: shows schematically the filling of the supply holder;
- Fig. 5: shows a schematic top view of a possible embodiment of a whole device;
- Fig. 6: Ashows a schematic top view of a supply holder in combination with pressing bodies, press-out member and a gripper;
- Fig. 6B: shows a schematic side view of the gripper;

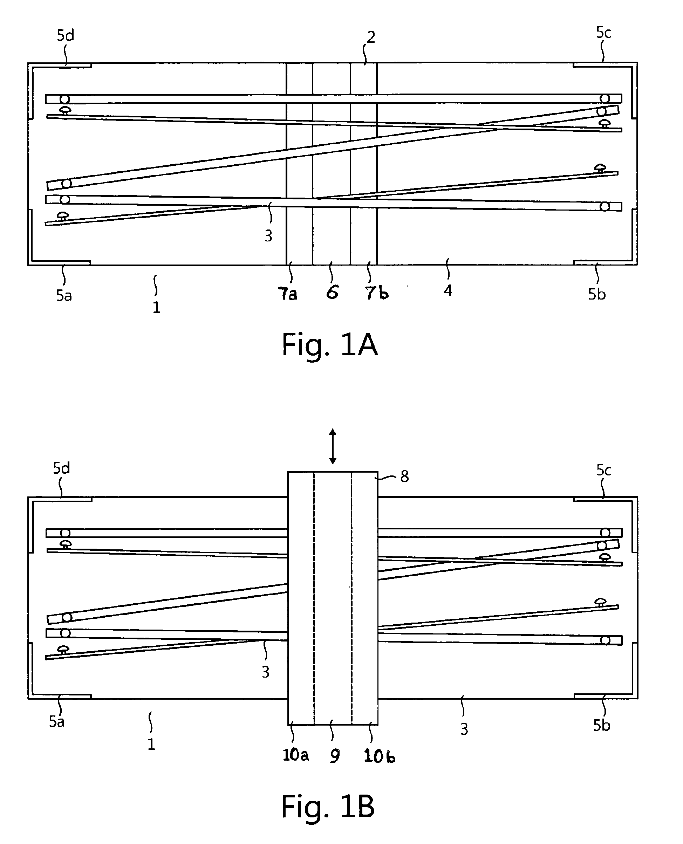

Fig. 1A shows a schematic top view of a possible embodiment of a supply holder 1 and a first pressing body 2, wherein supply holder 1 is filled with five elongate elements 3. These are handles, for instance for buckets, manufactured in an injection-moulding process, which are provided at the outer ends with toadstool-like protrusions. Such handles are supplied in bulk and must then, in an assembly plant, be picked up one by one and attached to a bucket manually or using a robot. The picking up is difficult and time-consuming because the spatial orientation of elements 3 is not fixed and because the objects become hooked together. In order to automate this picking up, according to the invention a relatively small number of elements 3 is placed in supply holder 1 at a time. Supply holder 1 consists of a bottom 4 and four corner pieces 5a,..5d, and is provided in the centre with a recess in which the first pressing body 2 is placed such that it can move in a direction perpendicularly of the figure. First pressing body 2 is provided on the top side with a recess 6, adjacently of which two strips 7a,7b of a friction material such as polyurethane are arranged.

Fig. 1B shows supply holder 1 in combination with a second pressing body 8. Pressing body 8 consists of a block provided with a recess 9 which substantially connects to recess 6 of first pressing body 2. On the underside pressing body 8 is provided with two strips 10a,10b of a friction material such as polyurethane. In order to individualize elements 3 first pressing body 2 and second pressing body 8 are moved toward each other, after which second pressing body 8 is moved reciprocally several times, as indicated in the figure. This has the result that at least the central parts of elements 3 coming to lie adjacently of each other.

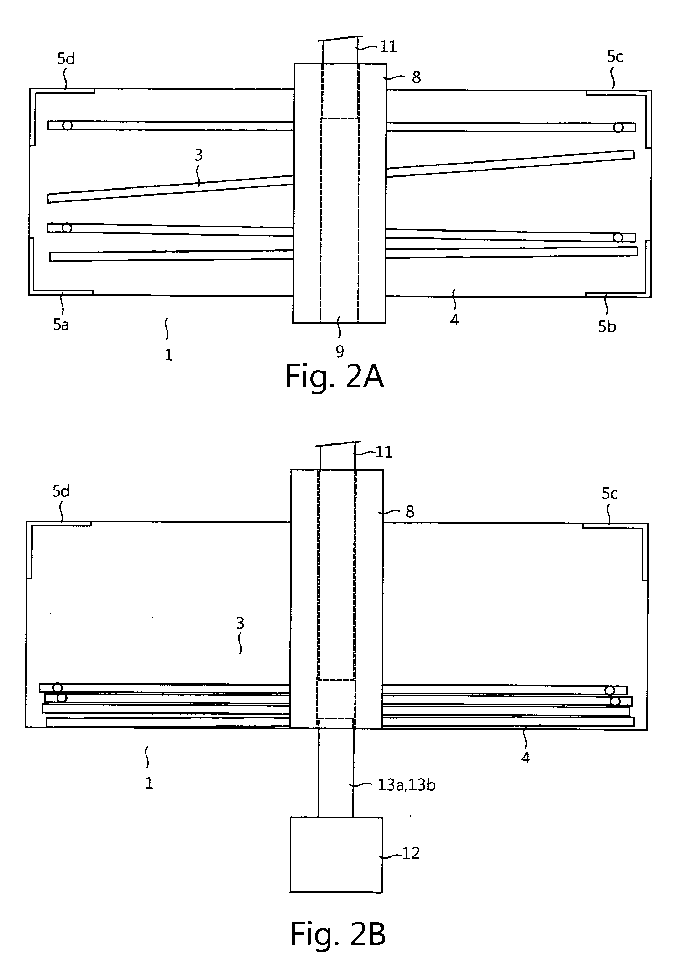

Fig. 2A shows supply holder 1 in combination with pressing bodies 2,8 and a press-out member 11. Press-out member 11 can slide in the combined recesses 6,9. Elements 3 can now be pushed in the direction of corner pieces 5a,5b by releasing pressing bodies 2,8 to some extent.

Fig. 2b shows supply holder 1 in combination with pressing bodies 2,8, press-out member 11 and a gripper 12 provided with two gripper members 13a,13b, of which only gripper member 13a is visible in the figure. Corner pieces 5a,5b have meanwhile been removed and gripper 12 can grip and remove the closest element 3. Press-out member can then press the remaining elements 3 in the direction of the edge of supply holder 1, after which the subsequent element 3 can be gripped and removed, this such that eventually all elements 3 are individualized and removed. Supply holder 1 can then be refilled and a new cycle can be started.

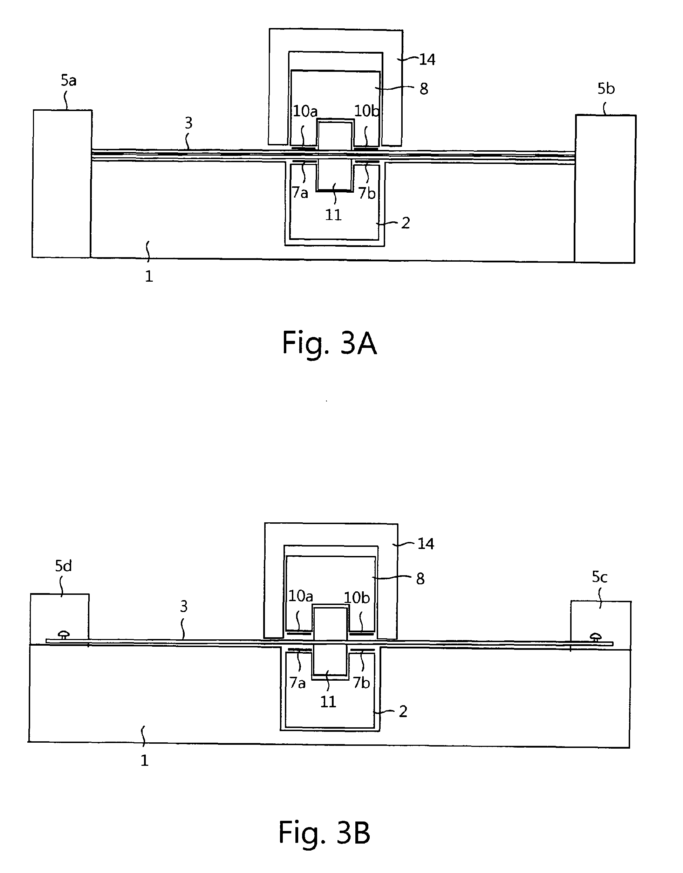

Fig. 3A shows a front view of supply holder 1 in combination with pressing bodies 2,8 and press-out member 11, wherein pressing bodies 2,8 are activated. Elements 3 still lie partially one over another but, after press-out member 8 has been moved reciprocally several times, at least the central parts of elements 3 lie adjacently of each other. In the embodiment shown here pressing body 8 is arranged in a guide 14 which substantially rests on elements 3.

Fig. 3B shows a front view of supply holder 1 in combination with pressing bodies 2,8, press-out member 11 and guide 14, wherein pressing bodies 2,8 are no longer activated. The central parts of elements 3 now lie adjacently of each other, so that elements 3 can be removed by gripper 12. Guide 14 continues to rest here on elements 3 so that, while their freedom of movement is limited, the sliding parallel to supply holder 1 is not impeded.

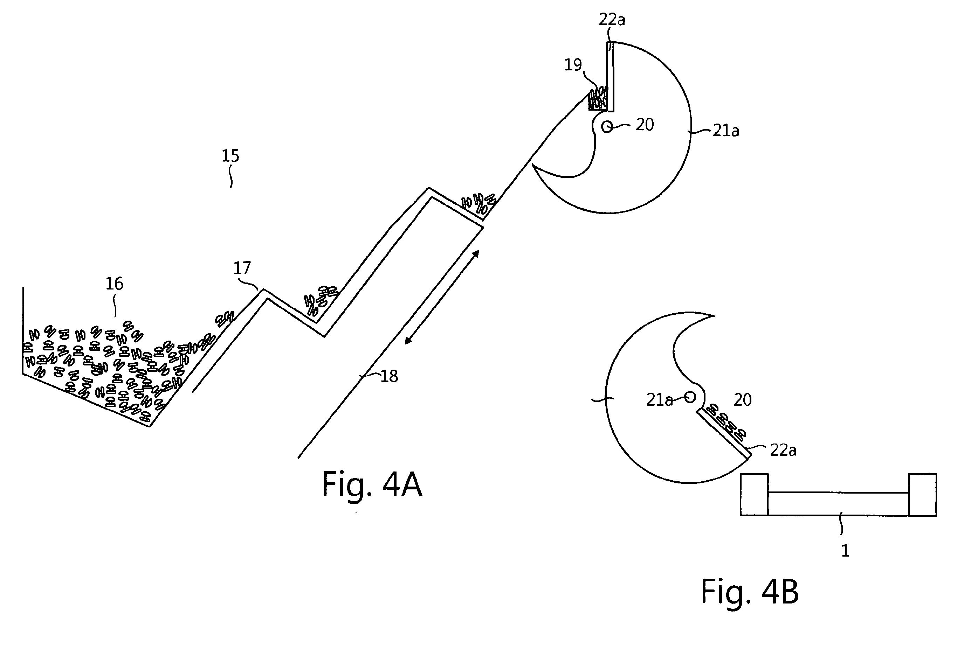

Fig. 4A shows a schematic side view of a possible embodiment of a filling member 15. Filling member 15 consists of a supply magazine 16 for elements 3 which transposes into a per se known step-like structure 17, in which is received a pushing-up member 18 which moves periodically and herein co-displaces elements 3 so that they come to lie a step higher at a time. The repeated pushing up of elements, wherein it is mainly the entangled elements 5 which remain behind or fall back again, forms a very effective method of separating groups of entangled elements into small groups. On the upper side this step-like structure 17 is provided with a recess which forms an intermediate magazine 19 and which is large enough for 4-6 elements to fit therein. Placed on a shaft 20 close to intermediate magazine 19 are two identical discs 21 a,21 b, of which only disc 21 a is visible in the figure. Discs 21 a,21 b are each provided with a recess wherein one edge takes a hook-like form and the other edge is provided with a support plate 22a,22b mounted perpendicularly of the disc. Support plates 22a,22b together also form a rear wall of intermediate magazine 19, whereby elements 3 are prevented from bending and dropping out. When a sufficient number of elements 3 is present in intermediate magazine 19, shaft 20 is rotated and the elements drop into supply holder 1, as shown in Fig. 4B, after which discs 21 a,21 b are returned to the position shown in Fig. 4A. The hook-like edges of discs 21 a,21 b here ensure that elements protruding partially outside intermediate magazine 19 are also carried along.

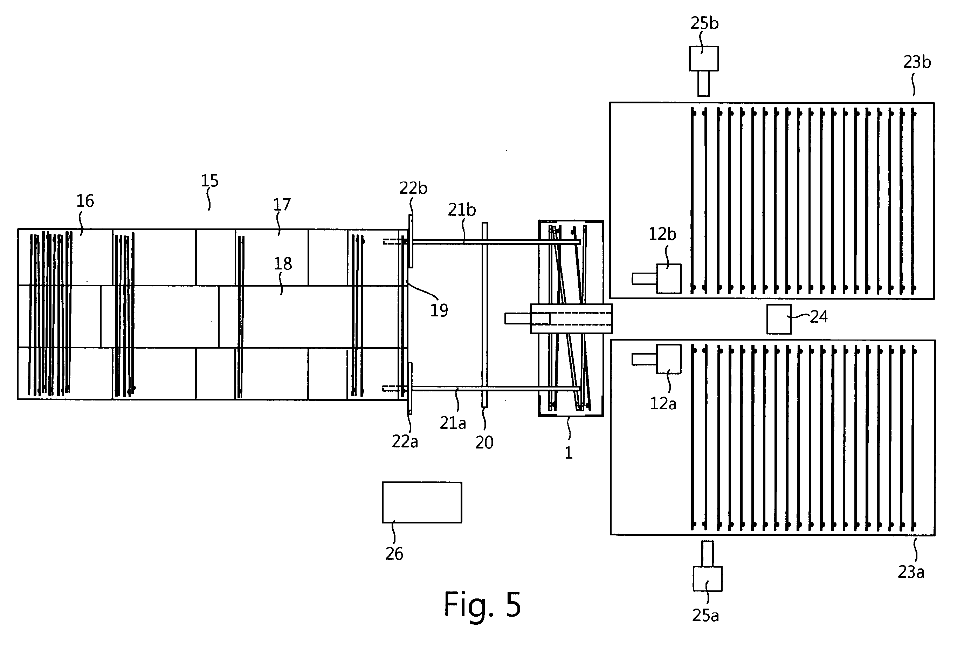

Fig. 5 shows a schematic top view of a possible embodiment of a whole device, consisting of filling member 15, supply magazine 16, step-like structure 17, pushing-up members 18, discs 21 a,21 b with support plates 22a,22b, supply holder 1, two grippers 12a, 12b which alternately grip and place an element 3 in respective rotating magazines 23a,23b. Also provided is a digital camera 24 which monitors the orientation of elements 3 in magazines 23a,23b and, if necessary, controls additional grippers 25a,25b for the purpose of rotating elements 3 such that all protrusions have an identical orientation. Finally, a process computer 26 is provided which receives signals from the various sensors arranged in the device and which controls the drives forming part of the device. The device shown here has two grippers 12a,12b and two magazines 23a,23b. It will be apparent that these numbers can be changed at random depending on the requirements set for the device.

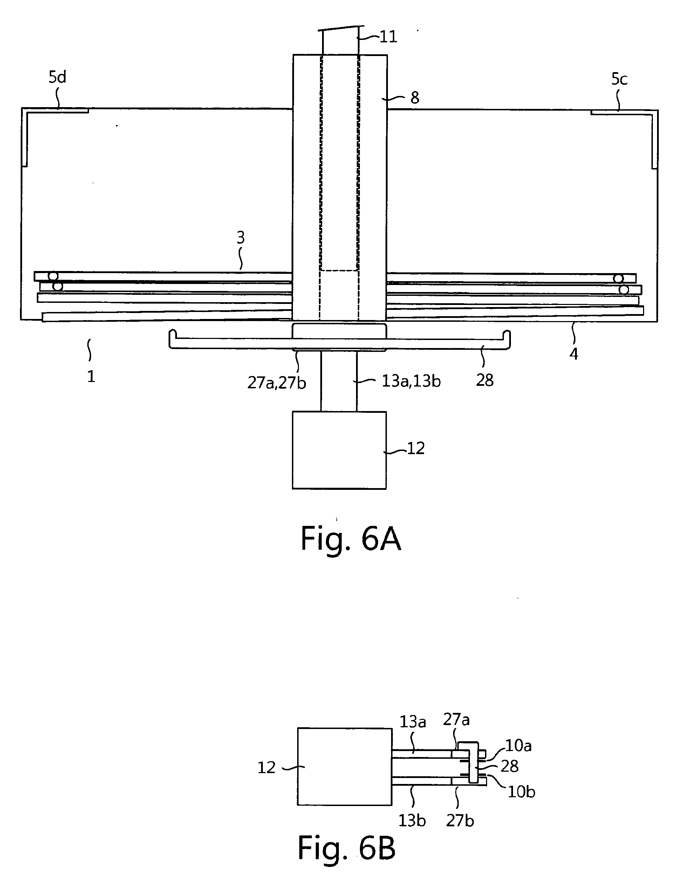

Fig. 6A shows supply holder 1 in combination with pressing bodies 2,8, press-out member 11 and an alternative gripper 12, provided with two gripper members 13a,13b on which are mounted two jaws 27a,27b which can be placed in a position just in front of supply holder 1 by gripper 12, after which press-out member 11 presses an element 3 between jaws 27a,27b. Jaw 27a is provided with an orienting bracket 28 which ensures that an element 3 positioned at something of an angle is rotated parallel to the longitudinal side of supply holder 1 when presented, so that an element 3 delivered by gripper 12 is always situated in precisely the same position, this simplifying a further processing.

Fig. 6B shows a side view of gripper 12, with gripper members 13a,13b provided with jaws 27a,27b and with orienting bracket 28.

Shown in each of the above embodiments are elongate objects 3 of a rectangular cross-section. The device is however also found to be highly suitable for individualizing objects having for instance an oval cross-section or a T-shaped cross-section.

## Claims

1. Device for individualizing and presenting for further processing an elongate object provided with protrusions close to the outer ends, wherein the device comprises a supply holder (1) in which a number of elongate objects (3) can be deposited **characterized in that** the device comprises pressing means for pressing flat elongate objects present in the supply holder, and at least one gripper (12) positioned close to a longitudinal side of the supply holder and adapted to grip and pull the closest elongate object out of the supply holder, wherein the pressing means comprise a first and a second pressing body (2, 8) for pressing the elongate objects against each other close to their centres, wherein at least the second pressing body (8) is coupled to a drive adapted to move the second pressing body reciprocally at least substantially perpendicularly of the elongate objects, such that at least close to their centres the elongate objects come to lie adjacently of each other, wherein the device is also provided with a press-out member (11) for sliding the elongate objects in a direction of the gripper when the pressing bodies are released.

2. Device as claimed in claim 1, **characterized in that** a side of the first pressing body (2) which can press on the elongate objects (3) and a side of the second pressing body (8) which can press on the elongate objects are provided with a friction layer.

3. Device as claimed in claim 2, **characterized in that** the friction layer is manufactured from polyurethane.

4. Device as claimed in any of the foregoing claims, **characterized in that** the pressing means also comprise a guide (14) adapted to prevent the elongate objects sliding over each other when the pressing bodies are released.

5. Device as claimed in any of the foregoing claims, wherein the gripper is provided with an orienting bracket (28) running parallel to the longitudinal side of the supply holder for the purpose of orienting an elongate object (3) for gripping at least substantially parallel to the longitudinal side of the supply holder (1).

6. Device as claimed in claim 1 or 5, **characterized in that** the first pressing body (2) and the second pressing body (8) are provided with a recess (9) running transversely of the elongate objects for allowing passage of the press-out member (11).

7. Device as claimed in any of the foregoing claims, **characterized in that** the device also comprises a filling member (15) consisting of a step-like structure (17) with pushing-up members (18) for periodically filling an intermediate magazine (19) with one to five elongate objects (3).

8. Device as claimed in claim 7, **characterized in that** the device is provided with two discs (21 a, 21 b) provided with a recess for taking the elongate objects (3) present in the intermediate magazine (19) out of the intermediate magazine and placing them in the supply holder (1).

9. Device as claimed in claim 8, **characterized in that** the recess of a disc (21 a, 21 b) is provided with a hook-like edge and with a straight edge provided with a support plate (22a, 22b).

10. Device as claimed in any of the foregoing claims, **characterized in that** the device is provided with at least one outfeed magazine (23a, 23b) into which the gripper (12) can place individual elongate objects (3), and a reversing member (25a, 25b) for orienting elongate objects (3) present in the outfeed magazine.

11. Method of individualizing and presenting for further processing elongate objects (3) provided with protrusions close to the outer ends, **characterized in that** a number of elongate objects is placed in a supply holder (1), that the elongate objects are pressed against each other close to their centres by pressing bodies (2, 8), wherein at least one pressing body (8) moves reciprocally several times in a direction perpendicularly of a longitudinal direction of the elongate objects, such that at least close to their centres the elongate objects come to lie adjacently of each other, after which the pressing bodies are released to some extent, after which the elongate objects are pressed laterally out of the supply holder by a press-out member (11), wherein a gripper (12) placed adjacently of the supply holder always grips and places the closest elongate object in a magazine.

## Patentansprüche

1. Gerät zur Individualisierung und Präsentierung eines länglichen Objektes für die Weiterverarbeitung, welches mit Überständen nahe den äußeren Enden versehen ist; **dadurch gekennzeichnet, dass** das Gerät mit einem Vorratsbehälter (1) ausgestattet ist, in welchen eine Anzahl länglicher Objekte (3) gelegt werden kann; **dadurch gekennzeichnet, dass** das Gerät mit Presselementen ausgestattet ist, um flache, längliche Objekte, die sich im Vorratsbehälter befinden, zu pressen; und mit mindestens einem Greifer (12), der nahe der Längsseite des Vorratsbehälters positioniert ist und dafür geeignet ist, das am nächsten liegende längliche Objekt zu greifen und aus dem Vorratsbehälter zu ziehen; **dadurch gekennzeichnet, dass** die Presselemente einen ersten und zweiten Presskörper (2, 8) haben, um die länglichen Objekte nahe ihres Zentrums gegeneinander zu pressen; **dadurch gekennzeichnet, dass** zumindest der zweite Presskörper (8) mit einem Antrieb verbunden ist, der dafür geeignet ist, den zweiten Presskörper so wechselseitig zumindest im Wesentlichen perpendikulär der länglichen Objekte zu bewegen, dass die länglichen Objekte zumindest nahe ihres Zentrums letztendlich nebeneinander liegen; **dadurch gekennzeichnet, dass** das Gerät auch ein Element zum Herauspressen (11) besitzt, um die länglichen Objekte in eine Richtung des Greifers zu schieben, wenn die Presskörper ausgelöst werden.

2. Gerät wie beschrieben in Anspruch 1, **dadurch gekennzeichnet, dass** eine Seite des ersten Presskörpers (2), die auf die länglichen Objekte (3) pressen kann, und eine Seite des zweiten Presskörpers (8), die auf die länglichen Objekte pressen kann, mit einer Reibungsschicht versehen sind.

3. Gerät, wie beschrieben in Anspruch 2, **dadurch gekennzeichnet, dass** die Reibungsschicht aus Polyurethan gefertigt ist.

4. Gerät, wie in den vorangehenden Ansprüchen beschrieben, **dadurch gekennzeichnet, dass** die Presselemente mit einer Führung (14) ausgestattet sind, dafür geeignet, zu verhindern, dass die länglichen Objekte übereinander rutschen, wenn die Presskörper ausgelöst werden.

5. Gerät, wie in den vorangehenden Ansprüchen beschrieben, **dadurch gekennzeichnet, dass** der Greifer mit einer Orientierungsleiste (28) ausgestattet ist, die parallel zu der Längsseite des Vorratsbehälters verläuft, und die den Zweck hat, ein längliches Objekt (3) so auszurichten, dass es zumindest im Wesentlichen parallel zu der Längsseite des Vorratsbehälters (1) gegriffen werden kann.

6. Gerät, wie beschrieben in Anspruch 1 oder 5, **dadurch gekennzeichnet, dass** der erste Presskörper (2) und der zweite Presskörper (8) mit einer Aussparung (9) versehen sind, die schräg entlang der länglichen Objekte verläuft und dem Element zum Herauspressen (11) Durchgang lässt.

7. Gerät, wie in den vorangehenden Ansprüchen beschrieben, **dadurch gekennzeichnet, dass** das Gerät auch mit einem Auffüllelement (15) ausgestattet ist, das aus einer stufenartigen Struktur (17) besteht und Hochschiebeelemente besitzt (18), um ein Zwischenmagazin (19) periodisch mit ein bis fünf länglichen Objekten (3) zu befüllen.

8. Gerät, wie beschrieben in Anspruch 7, **dadurch gekennzeichnet, dass** das Gerät mit zwei Scheiben (21 a, 21 b) ausgestattet ist, versehen mit einer Aussparung, um die länglichen Objekte (3), die sich im Zwischenmagazin (19) befinden, aus diesem zu nehmen und in den Vorratsbehälter (1) zu legen.

9. Gerät, wie in Anspruch 8 beschrieben, **dadurch gekennzeichnet, dass** die Aussparung einer Scheibe (21 a, 21 b) mit einer hakenartigen Kante und einer geraden Kante versehen ist, wiederum versehen mit einer Stützplatte (22a, 22b).

10. Gerät, wie in den vorangehenden Ansprüchen beschrieben, **dadurch gekennzeichnet, dass** das Gerät mit mindestens einem Abgabemagazin (23a, 23b), in welches der Greifer (12) einzelne längliche Objekte (3) legen kann, und einem Umkehrungselement (25a, 25b) für die Ausrichtung länglicher Objekte (3) ausgestattet ist, die sich im Abgabemagazin befinden.

11. Methode, längliche Objekte (3) für die Weiterverarbeitung zu individualisieren und zu präsentieren, welche mit Überständen nahe den äußeren Enden versehen sind; **dadurch gekennzeichnet, dass** eine Anzahl länglicher Objekte in einen Vorratsbehälter (1) gelegt wird, dass die länglichen Objekte durch Presskörper (2, 8) nahe ihres Zentrums gegeneinander gepresst werden; **dadurch gekennzeichnet, dass** sich zumindest ein Presskörper (8) so wechselseitig einige Male in eine Richtung bewegt, perpendikulär zu einer Längsrichtung der länglichen Objekte, dass die länglichen Objekte zumindest nahe ihres Zentrums letztendlich nebeneinander liegen, wonach die Presskörper teilweise ausgelöst werden, wonach die länglichen Objekte seitwärts durch ein Element zum Herauspressen (11) aus dem Vorratsbehälter gepresst werden; **dadurch gekennzeichnet, dass** ein Greifer (12), der am Vorratsbehälter angrenzt, immer das am nächsten liegende längliche Objekt greift und in ein Magazin legt.

## Revendications

1. Dispositif pour individualiser et présenter pour un traitement ultérieur un objet allongé muni de saillies près des extrémités externes, dans lequel le dispositif comprend un support d'approvisionnement (1) dans lequel un certain nombre d'objets allongés (3) peut être déposé, **caractérisé en ce que** le dispositif comprend des moyens de pression pour presser des objets allongés plats présents dans le support d'approvisionnement, et au moins une pince (12) positionnée près d'un côté longitudinal du support d'approvisionnement et adaptée pour saisir et tirer l'objet allongé le plus proche hors du support d'approvisionnement, dans lequel les moyens de pression comprennent un premier et un second corps de pression (2, 8) pour presser les objets allongés l'un contre l'autre à proximité de leurs centres, dans lequel au moins le second corps de pression (8) est accouplé à un entraînement adapté pour déplacer le second corps de pression réciproquement au moins sensiblement perpendiculairement aux objets allongés, de telle sorte qu'au moins à proximité de leurs centres les objets allongés viennent se placer de manière adjacente les uns aux autres, dans lequel le dispositif est également muni d'un élément de pression (11) pour faire glisser les objets allongés dans une direction de la pince lorsque les organes de pression sont libérés.

2. Dispositif selon la revendication 1, dans lequel un côté du premier corps de pression (2) qui peut presser sur les objets allongés (3) et un côté du deuxième corps de pression (8) qui peut presser sur les objets allongés, sont pourvus d'une couche de friction.

3. Dispositif selon la revendication 2, dans lequel la couche de friction est fabriquée à partir de polyuréthane.

4. Dispositif selon l'une des revendications précédentes, dans lequel les moyens de pression comprennent également un guide (14) adapté pour empêcher les objets allongés de glisser les uns sur les autres lorsque les organes de pression sont libérés.

5. Dispositif selon l'une des revendications précédentes, dans lequel la pince est munie d'une équerre d'orientation (28) s'étendant parallèlement au côté longitudinal du support d'approvisionnement dans le but d'orienter un objet allongé (3) pour le saisir, au moins sensiblement parallèle au côté longitudinal du support d'approvisionnement (1).

6. Dispositif selon les revendications 1 ou 5, dans lequel le premier corps de pression (2) et le second corps de pression (8) sont pourvus d'un évidement (9) s'étendant transversalement par rapport aux objets allongés pour permettre le passage de l'élément de pression (11).

7. Dispositif selon l'une des revendications précédentes, dans lequel le dispositif comprend également un élément de remplissage (15) constitué d'une structure en forme de marche (17) avec des membres de poussée vers le haut (18) pour le remplissage périodique d'un magasin intermédiaire (19) par un à cinq objets allongés (3).

8. Dispositif selon la revendication 7, dans lequel le dispositif est muni de deux disques (21 a, 21 b) pourvus d'un évidement pour saisir les objets allongés (3) présents dans le magasin intermédiaire (19) hors du magasin intermédiaire et pour les placer dans le support d'approvisionnement (1).

9. Dispositif selon la revendication 8, dans lequel l'évidement d'un disque (21 a, 21 b) est pourvu d'un bord en forme de crochet et d'un bord droit pourvu d'une plaque de support (22a, 22b).

10. Dispositif selon l'une des revendications précédentes, dans lequel le dispositif est pourvu d'au moins un magasin de sortie (23a, 23b) dans lequel la pince (12) peut placer des objets allongés individuels (3), et un élément d'inversion (25a, 25b) pour orienter des objets allongés (3) présents dans le magasin de sortie.

11. Procédé pour individualiser et présenter pour un traitement ultérieur des objets allongés (3) munis de saillies près des extrémités externes, dans lequel un certain nombre d'objets allongés est placé dans un support d'approvisionnement (1), les objets allongés sont pressés les uns contre les autres à proximité de leurs centres par des organes de pression (2, 8), dans lequel au moins un organe de pression (8) se déplace réciproquement plusieurs fois dans une direction perpendiculaire à une direction longitudinale par rapport aux objets allongés, de telle sorte qu'au moins à proximité de leurs centres les objets allongés viennent se placer de manière adjacente les uns aux autres, après quoi les organes de pression sont libérés dans une certaine mesure, après quoi les objets allongés sont pressées latéralement hors du support d'approvisionnement par un élément de pression (11), dans lequel une pince (12), placée de manière adjacente au support d'approvisionnement, saisit et place toujours l'objet allongé le plus proche dans un magasin.
